# FASCICULE DE BREVET EUROPEEN

(11) **EP 4 348 776 B1**
(45) Date de publication et mention de la délivrance du brevet: **02.07.2025**
(21) Numéro de dépôt: 22732599.0
(22) Date de dépôt: 23.05.2022
(51) Int. Cl.: H01S 3/082, H01S 3/07, H01S 3/08, H01S 3/11, H01S 3/067

(54) **OSCILLATEUR LASER A IMPULSIONS ULTRA-COURTES DE TYPE MAMYSHEV ET SON DISPOSITIF DE DEMARRAGE**
MAMYCHEV-LASEROSZILLATOR ZUR ERZEUGUNG ULTRAKURZER IMPULSE UND VORRICHTUNG ZUM STARTEN DAVON
MAMYSHEV LASER OSCILLATOR FOR GENERATING ULTRA-SHORT PULSES AND DEVICE FOR STARTING SAME

(30) Priorité: 27.05.2021 FR 2105538
(43) Date de publication de la demande: 10.04.2024
(73) Titulaire: Commissariat à l'Energie Atomique et aux Energies Alternatives, 75015 Paris (FR)
(72) Inventeur: HUGONNOT, Emmanuel, 33116 LE BARP Cedex (FR); POEYDEBAT, Etienne, 33116 LE BARP Cedex (FR)
(74) Mandataire: Brevalex
(86) Numéro de dépôt international: PCT/FR2022/050974
(87) Numéro de publication internationale: WO 2022/248801

(56) Documents cités:
- CN-U- 210 926 601
- US-A1- 2019 305 516
- LIU WU ET AL: "20 MW Mamyshev Oscillator Featuring LMA-PCF", 2019 CONFERENCE ON LASERS AND ELECTRO-OPTICS (CLEO), OSA, 5 May 2019 (2019-05-05), pages 1 - 2, XP033569906, DOI: 10.23919/CLEO.2019.8749778
- POEYDEBAT ETIENNE ET AL: "All-fiber Mamyshev oscillator with high average power and harmonic mode-locking", vol. 45, no. 6, 15 March 2020 (2020-03-15), pages 1395 - 1398, XP009533504, ISSN: 0146-9592, Retrieved from the Internet <URL:https://doi.org/10.1364/OL.389522?nosfx=y> [retrieved on 20200305], DOI: 10.1364/OL.389522

## Description

### DOMAINE TECHNIQUE

L'invention se rapporte au domaine des systèmes lasers délivrant des impulsions ultra-courtes, et plus particulièrement aux oscillateurs fibrés à blocage de modes (« ML » pour Mode-Locking en anglais) passif de type « Mamyshev ». Ceux-ci sont particulièrement attractifs car ils présentent des performances remarquables (énergies de plusieurs dizaines de nJ, durées d'impulsions extrêmement courtes <50 fs) tout en étant simples à réaliser (peu de composants).

Néanmoins, un défaut de ces systèmes est qu'il est difficile voire impossible de les faire démarrer. L'invention proposée permet de remédier à ce problème en proposant un système de démarrage simple et robuste d'un oscillateur fibré à blocage de modes passif de type « Mamyshev ».

Un tel oscillateur est basé sur la concaténation de deux régénérateurs Mamyshev.

Le principe de fonctionnement d'un régénérateur Mamyshev est le suivant : une impulsion se propageant dans une fibre optique est soumise au phénomène d'automodulation de phase (SPM pour Self-Phase Modulation an anglais), induisant un élargissement spectral. Un filtre spectral passe-bande, de longueur d'onde centrale suffisamment décalée par rapport à la longueur d'onde de l'impulsion initiale, permet alors de ne laisser passer que la partie du spectre générée par SPM. Ainsi, le mécanisme agit comme un absorbant saturable. Seules les impulsions assez intenses pour produire le décalage spectral suffisant peuvent être transmises. Les impulsions insuffisamment intenses sont bloquées.

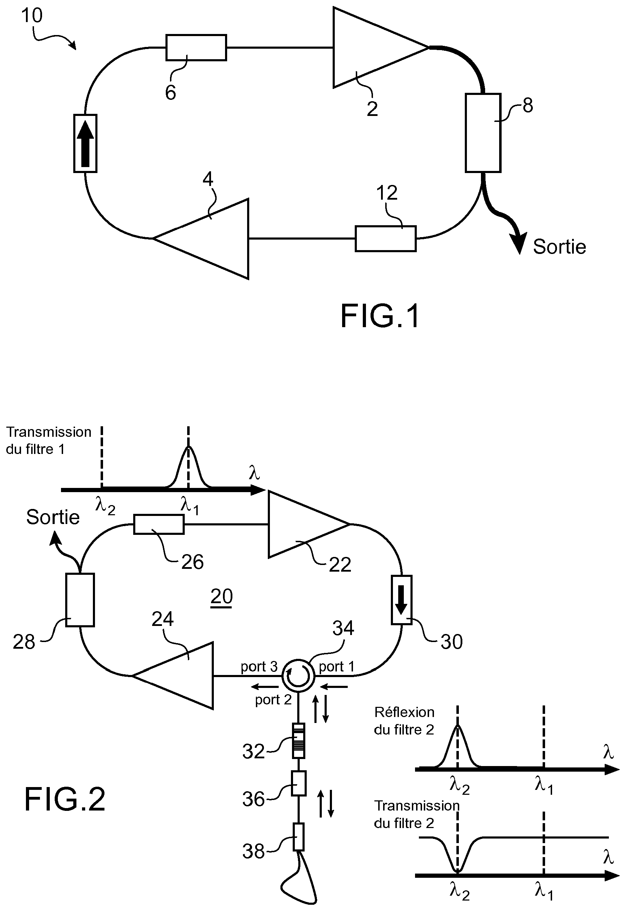

L'oscillateur Mamyshev met en oeuvre ce principe. Comme illustré sur la Figure 1 (basée sur l'article de E.Poeydebat et al. intitulé « All-fiber Mamyshev oscillator with high average power and harmonic mode-locking », Vol. 45, No. 6 / 15 March 2020 / Optics Letters, p. 1395-1398), la cavité laser d'un oscillateur Mamyshev 10 en anneau comporte deux amplificateurs 2, 4, un coupleur 8 de sortie et deux filtres passe-bande 6, 12 entre les amplificateurs. En décalant suffisamment les filtres, seules des impulsions suffisamment intenses pour franchir par SPM l'écart entre les deux filtres peuvent se propager dans la cavité. Conçu pour fonctionner en régime fortement non linéaire, un tel système donne ainsi accès à des niveaux d'intensité extrêmement élevés, comme expliqué notamment dans l'article de E.Poeydebat et al. cité ci-dessus. Agissant comme un absorbant saturable ultra-rapide, le mécanisme peut donner naissance à des impulsions ultra-brèves, inférieures à 50 fs.

La profondeur de modulation de l'absorbant saturable virtuel, et par voie de conséquence, le régime de fonctionnement et la possibilité de démarrage d'un oscillateur Mamyshev, dépendent fortement de l'écart spectral entre les filtres (typiquement de formes gaussiennes ou proches de gaussiennes) par rapport à leur largeur spectrale. Lorsque la séparation spectrale entre filtres est équivalente à leurs largeurs à mi-hauteur, une forte superposition des spectres transmis est obtenue, ce qui correspond à une faible profondeur de modulation. Les systèmes peuvent alors être auto-démarrants, mais ils délivrent des spectres fortement modulés de faibles largeurs spectrales (seulement quelques nm ou moins, voir notamment l'article de N. Tarasov et al., "Mode-locking via dissipative Faraday instability, Nat. Commun. 7, 12441 (2016)).

Lorsque l'écart spectral entre les filtres est légèrement supérieur, à peu près égal à leur largeur au pied, soit typiquement deux fois la largeur à mi-hauteur, la superposition spectrale au pied des filtres est encore suffisante pour qu'un lasage CW soit possible et que le système puisse démarrer seul. La génération de fluctuations par modulation des diodes de pompe des amplificateurs (typiquement quelques dizaines de kHz pendant quelques dizaines de microsecondes) permet d'aider à démarrer le système, mais l'écart entre les filtres est alors fixé par le seuil de lasage CW ce qui limite la profondeur de modulation et donc les performances du système (largeur spectrale, instabilités du blocage de modes).

Lorsque la séparation entre les filtres est beaucoup plus importante (typiquement plusieurs fois la largeur des filtres), il n'y a plus aucune superposition spectrale des filtres et des profondeurs de modulation très élevées sont obtenues. C'est dans ce cas que des spectres extrêmement larges (jusqu'à ~100 nm), correspondant à des impulsions ultra-courtes (< 50 fs) sont obtenus. Par contre, l'écart spectral est alors tel que le lasage CW devient rigoureusement impossible et le système ne peut plus démarrer à partir des seules fluctuations du bruit ni même en modulant les diodes de pompe. Il est alors indispensable de recourir à des moyens annexes pour le démarrer. Dans ce cas, les solutions les plus utilisées pour le démarrage sont alors soit d'injecter une impulsion initiale suffisamment intense issue d'une source externe, soit de rajouter un bras annexe, spécifique au démarrage et qui « by-pass » le premier filtre, incluant un absorbant saturable ou un mécanisme type rotation non-linéaire de la polarisation. Une fois le démarrage effectué et le régime ML atteint, la source de démarrage peut être arrêtée. L'intérêt de ces solutions est modéré car elles nécessitent d'avoir recours à une source laser secondaire délivrant des impulsions courtes (soit un laser externe soit un bras annexe) limitant considérablement l'intérêt pratique de tels systèmes.

Une solution plus satisfaisante ne nécessitant pas de source externe tout en offrant l'avantage de fournir une profondeur de modulation importante est qu'un des deux filtres spectraux soit un filtre spectral accordable. Ainsi, le filtre peut être tout d'abord placé proche de l'autre filtre, de manière à initier un lasage CW, puis on module les diodes de pompe afin de générer des instabilités et, enfin, on écarte les filtres une fois le blocage de modes obtenu. L'inconvénient principal de cette solution est que le maintien du blocage de modes ne se fait qu'en ajustant progressivement la puissance de pompe en même temps que les filtres sont écartés, ce qui rend nécessaire soit une procédure manuelle complexe et aléatoire soit l'utilisation de composants motorisés onéreux pilotés par un algorithme de recherche de chemin.

Il n'existe actuellement pas de système permettant d'obtenir des impulsions ultra-courtes contrôlées par l'écart entre les filtres spectraux de manière simple, robuste, reproductible et peu onéreuse.

US 2019/305516 décrit un oscillateur Mamyshev multi-filtres à cavités imbriquées.

L'invention permet de résoudre ce problème en proposant un oscillateur Mamyshev pouvant comporter une grande profondeur de modulation (écart spectral entre les filtres de plusieurs fois la largeur des filtres), qu'il est possible de démarrer sans source secondaire d'impulsions courtes (laser externe ou bras annexe), simple à mettre en oeuvre (sans procédure complexe de démarrage), robuste (entièrement fibré) et peu onéreux (pas de filtres spectraux accordables).

### EXPOSÉ DE L'INVENTION

L'invention concerne d'abord un dispositif laser comportant :
- une première cavité formant oscillateur Mamyshev comportant un premier filtre passe-bande à une première longueur d'onde (λ₁), et un deuxième filtre qui transmet également la longueur d'onde (λ₁), mais qui est en réflexion à une deuxième longueur d'onde (λ₂),
- une deuxième cavité, contenant la première cavité, pour former un faisceau laser continu à la première longueur d'onde (λ₁) et/ou à une troisième longueur d'onde (λ₃) voisine de la première longueur d'onde (λ₁), l'écart entre λ₃ et λ₁ étant inférieur à la largeur spectrale du premier filtre et du deuxième filtre,
- des moyens pour permettre ou interrompre une oscillation continue à la longueur d'onde (λ₁) ou à ladite longueur d'onde (λ₃) voisine, dans la deuxième cavité.

Autrement dit, selon l'invention, le dispositif laser comporte une première cavité formant oscillateur Mamyshev comportant un 1er filtre à la longueur d'onde (λ₁), un deuxième filtre, en réflexion à la longueur d'onde (λ₂) mais en transmission à la longueur d'onde (λ₁), et une deuxième cavité, contenant la première, pour former un faisceau laser continu à la longueur d'onde (λ₁) ou à une longueur d'onde (λ₃) voisine de λ₁ et des moyens pour permettre ou interrompre une oscillation à la longueur d'onde (λ₁) ou à la longueur d'onde voisine, dans ladite deuxième cavité.

Selon l'invention, on réalise donc un système comprenant une première cavité et une deuxième cavité, la première cavité étant imbriquée dans la deuxième cavité, la deuxième cavité étant pour le démarrage et permettant d'obtenir un lasage continu (CW), et la première cavité étant pour le fonctionnement ML, le démarrage du laser ML étant basé sur des fluctuations du lasage (CW) ; après démarrage du laser ML, la lasage continu (CW) est inhibé.

L'invention se différencie donc des techniques habituelles mises en oeuvre pour démarrer un oscillateur Mamyshev à grande profondeur de modulation (avec non superposition des filtres), puisqu'en général on utilise une source externe d'impulsions courtes, un bras annexe incluant un absorbant saturable physique ou virtuel, ou un filtre accordable motorisé.

L'écart entre les longueurs d'onde λ₁ et λ₂ est par exemple comprise entre 5 nm et 25 nm. Le deuxième filtre peut être disposé en aval d'un circulateur optique.

La deuxième cavité peut être délimitée par un miroir, par exemple un miroir fibré ou par un miroir de Bragg fibré.

Les moyens pour permettre ou interrompre l'oscillation de la longueur d'onde (λ₁), dans la deuxième cavité, comportent par exemple un interrupteur optique ou un atténuateur optique variable.

Selon une réalisation particulière le deuxième filtre comporte un miroir à réseau de Bragg.

Le premier filtre peut par exemple comporter un filtre en transmission ou un circulateur optique et un filtre en réflexion.

Dans un dispositif laser selon l'invention, la première cavité peut être en anneau ou être une cavité linéaire.

L'invention concerne également un procédé de démarrage d'un dispositif laser tel que décrit ci-dessus ou dans la présente description, comportant :
- la génération, dans la deuxième cavité, d'un faisceau laser continu à la longueur d'onde (λ₁) ;
- la génération, dans la première cavité, d'un faisceau laser en impulsion à la longueur d'onde (λ₂) et à la longueur d'onde (λ₁),
- l'arrêt du faisceau laser continu.

Selon une réalisation particulière, les pertes ou le gain à la première longueur d'onde (λ₁) peuvent être modulées pendant la période de démarrage.

La première cavité comporte par exemple 2 amplificateurs à fibre, chacun pompé par une diode laser, le procédé comportant en outre une modulation du faisceau de ces diodes.

### BRÈVE DESCRIPTION DES DESSINS

[Fig. 1] représente un oscillateur Mamyshev connu ;
[Fig. 2] représente un exemple de réalisation d'un oscillateur Mamyshev selon l'invention ;
[Fig. 3] représente une courbe de réflectivité du miroir fibré en fonction du taux de couplage du coupleur fibré;
[Fig. 4A]

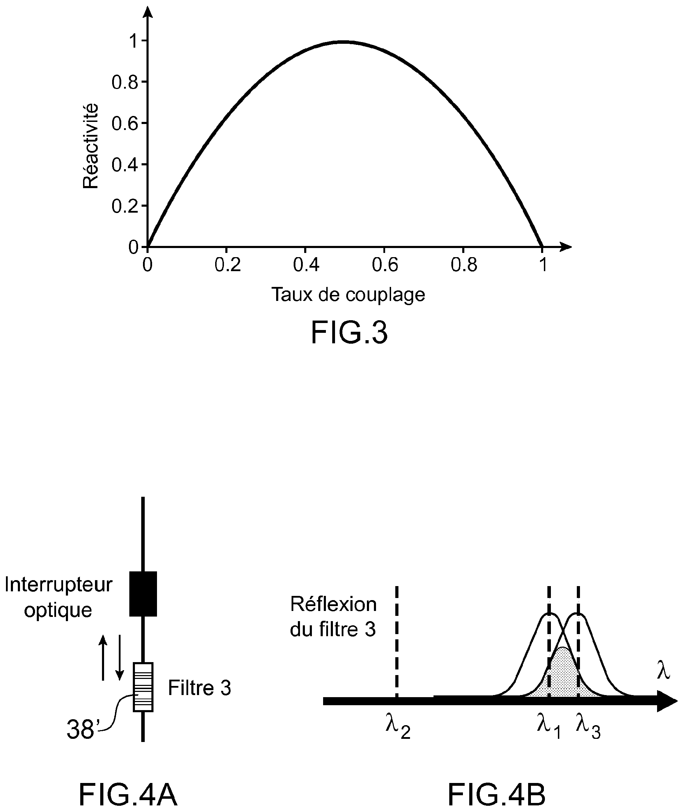

   [Fig. 4B] illustrent une utilisation d'un miroir de Bragg fibré à la place d'un miroir fibré ;

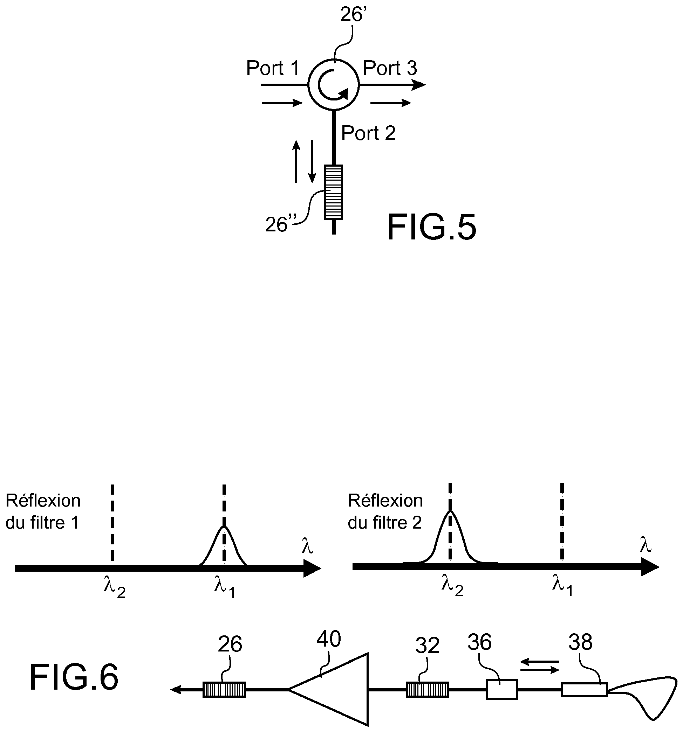

[Fig. 5] illustre une utilisation d'un filtre 1 en réflexion à la place du premier filtre en transmission ;
[Fig. 6] est un exemple de dispositif selon l'invention utilisant une cavité linéaire.

### EXPOSÉ DÉTAILLÉ DE MODES DE RÉALISATION PARTICULIERS

La figure 2 montre un exemple un exemple de réalisation d'un oscillateur Mamyshev selon l'invention.

Dans cet exemple, une 1^{ère} cavité 20, ici en anneau, de longueur par exemple inférieure à 30 mètres, comporte deux amplificateurs 22, 24, qui peuvent être notamment des amplificateurs à fibres, par exemple dopées à l'ytterbium (avec un gain « petit signal » qui peut être compris entre 20 dB et 30 dB).

Des exemples de tels amplificateurs sont donnés dans l'article de E.Poeydebat et al. intitulé « All-fiber Mamyshev oscillator with high average power and harmonic mode-locking », Vol. 45, No. 6 / 15 March 2020 / Optics Letters, p. 1395-1398. Chaque amplificateur comporte des moyens de pompage, par exemple une diode à 976 nm.

La cavité 20 comportant en outre un premier filtre spectral 26, par exemple un filtre gaussien, qui laisse passer un rayonnement dans une bande spectrale centrée à une longueur d'onde λ₁, par exemple de largeur 1 nm. Il peut être centré dans une bande qui correspond à l'émission des fibres amplificatrices, par exemple la bande de l'ytterbium. Elle comporte en outre un coupleur 28 de sortie, qui permet d'extraire le faisceau de sortie de la cavité.

Elle peut comporter un isolateur 30, qui assure une propagation unidirectionnelle.

Le système comporte également un deuxième filtre spectral 32, par exemple un filtre gaussien, centré à une longueur d'onde λ₂, par exemple de largeur 1 nm. Il peut être centré dans une bande qui correspond à l'émission des fibres amplificatrices, par exemple la bande de l'ytterbium. Ce filtre 32 est de préférence un filtre en réflexion (par exemple du type miroir à réseau de Bragg) : il réfléchit tout rayonnement à la longueur d'onde λ₂ et le renvoie dans la 1^{ère} cavité 20. Le premier filtre 26 ne laisse passer aucun rayonnement, ou très peu de rayonnement, à la longueur d'onde λ₂.

Ce deuxième filtre 32 est disposé, par rapport à l'anneau, derrière un circulateur optique 34 et en amont d'un interrupteur optique 36 (comme par exemple un switch optique) permettant de bloquer le passage du faisceau.

Enfin, la cavité est complétée par un miroir 38, par exemple un miroir fibré, par exemple encore un coupleur fibré 2 par 2 rebouclé sur lui-même.

L'écart entre les longueurs d'onde centrales λ₁ et λ₂ des filtres26, 32 est de préférence supérieur à n fois (par exemple : n = 4) la largeur des filtres individuels, cet écart est par exemple compris entre 5 nm et 15 nm (ou même 25 nm), ce qui permet d'éviter une superposition des spectres optiques définis par ces filtres.

Le profil de transmission d'un miroir de Bragg étant inverse à son profil de réflexion, le filtre 32 laisse passer les longueurs d'onde non réfléchies, et notamment tout rayonnement à la longueur d'onde λ₁.

Ainsi le dispositif de la figure 2 comporte deux cavités imbriquées :
- la première cavité est définie par la réflexion sur le filtre 32 ; elle est équivalente à un oscillateur de type Mamyshev tel qu'illustré sur la Figure 1 ;
- la seconde cavité, qui comporte la première cavité mais aussi une partie linéaire , est définie par la réflexion sur le miroir 38, qui réfléchit toutes les longueurs d'onde lui parvenant, notamment le rayonnement à la longueur d'onde λ₁.

Le fonctionnement de ce système est le suivant.

Lorsque les amplificateurs 22, 24 sont allumés et l'interrupteur optique 36 fermé (rendu passant), et que le gain des amplificateurs est supérieur aux pertes totales dans la seconde cavité (cette dernière condition est obtenue par les oscillations dans la cavité), le laser démarre sur les fluctuations du bruit en mode multimode libre.

Un faisceau continu multimode, présentant des fluctuations d'intensité, est émis à une longueur d'onde centrale λ₁ définie par le filtre 26. Les pics de forte intensité, suffisamment intenses pour franchir, par automodulation de phase (SPM pour « Self-Phase Modulation » an anglais), l'écart entre les filtres 26 et 32, sont alors réfléchis par le filtre 32 et peuvent osciller dans la première cavité.

Un train d'impulsions courtes est émis en sortie.

On retrouve donc le fonctionnement d'un oscillateur Mamyshev avec un absorbant saturable virtuel de grande profondeur de modulation. Une fois le fonctionnement à blocage de modes (« ML » pour Mode-Locking en anglais) obtenu, l'interrupteur optique 36 peut alors être ouvert (rendu non passant) afin d'inhiber le fonctionnement CW de la seconde cavité. Le laser émet alors un rayonnement qui inclut les longueurs d'onde λ₁ et λ₂.

Afin d'éviter que le lasage en continu (CW) soit par trop dominant et inhibe la possibilité d'obtenir un lasage ML, la réflectivité du miroir fibré 38 est de préférence ajustée de manière à ce que les deux fonctionnements présentent des puissances moyennes du même ordre de grandeur (typiquement quelques centaines de mW dans cet exemple). Cette réflectivité du miroir fibré 38 peut être ajustée entre 0% et 100% selon le taux de couplage du coupleur fibré utilisé, comme illustré en figure 3. Le taux de couplage peut être modifié en changeant de coupleur.

Il est également possible de remplacer l'interrupteur optique 36 par un atténuateur optique variable, ce qui permet non seulement d'ajuster finement la puissance réfléchie par le miroir fibré 38 en fonctionnement continu (CW) mais également d'inhiber le lasage CW en fonctionnement ML (en atténuant de telle sorte que les pertes totales de la seconde cavité soient supérieures au gain des amplificateurs).

Si les fluctuations naturelles du laser CW sont insuffisantes pour déclencher le fonctionnement ML, il est possible de moduler les diodes de pompe des amplificateurs 22, 24 pour générer des fluctuations plus importantes. Selon une réalisation, on utilise un générateur de fonction qui pilote l'alimentation des diodes de pompe. Par exemple, il s'agit d'un générateur de chez Keysight, par exemple encore le générateur Keysight 33210A Waveform/Function Generator.

On a donné ci-dessus l'exemple de profils spectraux gaussiens des filtres 26, 32, mais il est tout à fait possible d'utiliser des profils de forme différente.

Le miroir fibré 38 peut être remplacé par la réflexion de Fresnel du clivage de la fibre de sortie de l'interrupteur optique 36: l'angle de clivage détermine le coefficient de réflexion mais celui-ci est alors limité à un maximum de 5%.

Comme illustré en figure 4A, le miroir fibré 38 peut être remplacé par un miroir de Bragg fibré 38' (filtre 3) centré à une longueur d'onde λ₃ (figure 4B) : λ₃ est pris proche de λ₁, l'écart entre λ₃ et λ₁ étant inférieur aux largeurs spectrales de chacun des filtres 26, 38', de telle sorte qu'il y ait superposition spectrale du filtre 26 et du filtre 38', comme cela est illustré en figure 4B. Le lasage CW se produit à une longueur d'onde définie par cette superposition spectrale, la puissance du lasage CW étant ajustée par l'écart entre les filtres 26 et 38'.

Comme illustré en figure 5, le filtre en transmission 26 peut être remplacé par un circulateur optique 26' et un filtre 26" en réflexion.

Selon une autre réalisation, illustrée en figure 6, la cavité est uniquement linéaire. Dans ce cas, un seul amplificateur 40, fonctionnant, dans les deux sens, est utilisé. Le filtre 26 (par exemple un miroir de Bragg fibré de réflectivité inférieure à 100%) sert à la fois de filtre spectral et de coupleur de sortie.

Dans les exemples présentés, le système fonctionne dans la bande spectrale de l'ytterbium (autour de 1 µm) mais il peut être adapté à d'autres plages de longueur d'onde (notamment les bandes télécom 1,5 µm ou infra-rouge moyen 2-3 µm). L'invention permet de réaliser un système plus simple que les solutions existantes, telles que celles mettant en oeuvre l'injection d'une impulsion courte issue d'un laser externe, ou un bras annexe incluant un absorbant saturable. Elle permet d'obtenir un démarrage du blocage de modes avec une grande profondeur de modulation (même s'il n'y a pas de superposition spectrale entre les filtres) sans composant complexe et onéreux tel qu'un filtre accordable motorisé ou un absorbant saturable. De plus, il n'y a pas de paramètres réglables, ce qui confère au système une grande robustesse.

L'invention propose donc une solution simple au problème du démarrage des oscillateurs Mamyshev à grande profondeur de modulation (avec non superposition des filtres). L'invention peut être appliquée en tant que source d'impulsions ultracourtes pour une grande variété d'applications telles que la spectroscopie, l'ablation de couches minces par laser, le micro usinage/micro découpage/micro perçage/micro marquage, la chirurgie ophtalmique, l'imagerie multiphotonique, la structuration et texturation par laser, etc. Le schéma proposé, simple, compact, robuste et peu onéreux, est tout à fait adapté à une mise en oeuvre par un industriel du laser.

## Revendications

1. Dispositif laser comportant :
- une première cavité (20) formant oscillateur Mamyshev, comportant un premier filtre passe-bande (26) à une première longueur d'onde (λ₁), et un deuxième filtre (32) qui transmet également la longueur d'onde (λ₁) mais qui est en réflexion à une deuxième longueur d'onde (λ₂),
- une deuxième cavité, contenant la première cavité, pour former un faisceau laser continu à la première longueur d'onde (λ₁) et/ou à une troisième longueur d'onde (λ₃) voisine de la première longueur d'onde (λ₁), l'écart entre λ₃ et λ₁ étant inférieur à la largeur spectrale du premier filtre (26) et du deuxième filtre (32),
- des moyens (36) pour permettre ou interrompre une oscillation continue à la longueur d'onde (λ₁) ou à ladite longueur d'onde voisine, dans la deuxième cavité.

2. Dispositif laser selon la revendication 1, l'écart entre les longueurs d'onde λ₁ et λ₂ des filtres (24, 32) étant compris entre 5 nm et 25 nm.

3. Dispositif laser selon l'une des revendications 1 ou 2, le deuxième filtre (36) étant disposé en aval d'un circulateur optique (34).

4. Dispositif laser selon l'une des revendications 1 à 3, la deuxième cavité étant délimitée par un miroir (38), par exemple un miroir fibré ou par un miroir de Bragg fibré (38').

5. Dispositif laser selon l'une des revendications 1 à 4, les moyens pour permettre ou interrompre l'oscillation de la longueur d'onde (λ₁), dans la deuxième cavité, comportant un interrupteur optique (36) ou un atténuateur optique variable.

6. Dispositif laser selon l'une des revendications 1 à 5, le deuxième filtre (36) comportant un miroir à réseau de Bragg.

7. Dispositif laser selon l'une des revendications 1 à 6, ledit 1^{er} filtre comportant un filtre en transmission ou un circulateur optique (26') et un filtre en réflexion (26").

8. Dispositif laser selon l'une des revendications 1 à 7, la première cavité (20) étant en anneau ou étant une cavité linéaire.

9. Procédé de démarrage d'un dispositif laser selon l'une des revendications 1 à 8, comportant :
- la génération, dans la deuxième cavité, d'un faisceau laser multimode et continu, à la longueur d'onde (λ₁) ;
- la génération, dans la première cavité, d'un faisceau laser en impulsion à la longueur d'onde (λ₂) et à la longueur d'onde (λ₁),
- l'arrêt du faisceau laser continu.

10. Procédé selon la revendication 9, dans lequel les pertes ou le gain à la première longueur d'onde (λ₁) sont modulées pendant la période de démarrage.

11. Procédé selon l'une des revendications 9 ou 10, la première cavité comportant 2 amplificateurs à fibre chacun pompé par une diode laser, le procédé comportant en outre une modulation du faisceau de ces diodes.

## Patentansprüche

1. Laservorrichtung, umfassend:
- einen ersten Hohlraum (20), der einen Mamyshev-Oszillator bildet, umfassend einen ersten Bandpassfilter (26) bei einer ersten Wellenlänge (λ₁), und einen zweiten Filter (32), der auch die Wellenlänge (λ₁) überträgt, aber bei einer zweiten Wellenlänge (λ₂) reflektiert,
- einen zweiten Hohlraum, der den ersten Hohlraum enthält, zum Bilden eines kontinuierlichen Laserstrahls bei der ersten Wellenlänge (λ₁) und/oder bei einer dritten Wellenlänge (λ₃), die der ersten Wellenlänge (λ₁) nahe liegt, wobei der Abstand zwischen λ₃ und λ₁ kleiner ist als die spektrale Breite des ersten Filters (26) und des zweiten Filters (32),
- Mittel (36) zum Ermöglichen oder Unterbrechen einer kontinuierlichen Schwingung bei der Wellenlänge (λ₁) oder bei der benachbarten Wellenlänge in dem zweiten Hohlraum.

2. Laservorrichtung nach Anspruch 1, wobei der Abstand zwischen den Wellenlängen λ₁ und λ₂ der Filter (24, 32) zwischen 5 nm und 25 nm liegt.

3. Laservorrichtung nach einem der Ansprüche 1 oder 2, wobei der zweite Filter (36) stromabwärts von einem optischen Zirkulator (34) angeordnet ist.

4. Laservorrichtung nach einem der Ansprüche 1 bis 3, wobei der zweite Hohlraum durch einen Spiegel (38), beispielsweise einen fibrierten Spiegel oder durch einen fibrierten Bragg-Spiegel Bragg (38') begrenzt ist.

5. Laservorrichtung nach einem der Ansprüche 1 bis 4, wobei die Mittel zum Ermöglichen oder Unterbrechen der Schwingung der Wellenlänge (A1) in dem zweiten Hohlraum einen optischen Schalter (36) oder einen variablen optischen Dämpfer umfassen.

6. Laservorrichtung nach einem der Ansprüche 1 bis 5, wobei der zweite Filter (36) einen Bragg-Netzspiegel umfasst.

7. Laservorrichtung nach einem der Ansprüche 1 bis 6, wobei der erste Filter einen Übertragunsfilter oder einen optischen Zirkulator (26') und einen Reflexionsfilter (26'') umfasst.

8. Laservorrichtung nach einem der Ansprüche 1 bis 7, wobei der erste Hohlraum (20) ringförmig oder ein linearer Hohlraum ist.

9. Verfahren zum Starten einer Laservorrichtung nach einem der Ansprüche 1 bis 8, umfassend:
- das Erzeugen eines kontinuierlichen Multimode-Laserstrahls mit der Wellenlänge (λ₁) in dem zweiten Hohlraum;
- das Erzeugen eines gepulsten Laserstrahls mit der Wellenlänge (λ₂) und der Wellenlänge (λ₁) in dem ersten Hohlraum,
- das Ausschalten des kontinuierlichen Laserstrahls.

10. Verfahren nach Anspruch 9, wobei die Verluste oder die Verstärkung bei der ersten Wellenlänge (λ₁) während der Startphase moduliert werden.

11. Verfahren nach einem der Ansprüche 9 oder 10, wobei der erste Hohlraum jeweils zwei Faserverstärker umfasst, die von einer Laserdiode gepumpt werden, wobei das Verfahren ferner eine Strahlmodulation dieser Dioden umfasst.

## Claims

1. Laser device comprising:
- a first cavity (20) forming a Mamyshev oscillator, comprising a bandpass first filter (26) at a first wavelength (λ₁), and a second filter (32) that also transmits the wavelength (λ₁) but that is reflective at a second wavelength (λ₂),
- a second cavity, containing the first cavity, for forming a continuous-wave laser beam at the first wavelength (λ₁) and/or at a third wavelength (λ₃) neighbouring the first wavelength (λ₁), the separation between λ₃ and λ₁ being smaller than the spectral width of the first filter (26) and of the second filter (32),
- means (36) for allowing or interrupting a continuous-wave oscillation at the wavelength (λ₁) or at said neighbouring wavelength, in the second cavity.

2. Laser device according to claim 1, the separation between the wavelengths λ₁ and λ₂ of the filters (24, 32) being between 5 nm and 25 nm.

3. Laser device according to one of claims 1 or 2, the second filter (36) being disposed downstream of an optical circulator (34).

4. Laser device according to one of claims 1 to 3, the second cavity being delimited by a mirror (38), for example a fibre mirror or by a fibre Bragg mirror (38').

5. Laser device according to one of claims 1 to 4, the means for allowing or interrupting the oscillation of the wavelength (λ₁), in the second cavity, comprising an optical switch (36) or a variable optical attenuator.

6. Laser device according to one of claims 1 to 5, the second filter (36) comprising a Bragg grating mirror.

7. Laser device according to one of claims 1 to 6, said 1^{st} filter comprising a transmission filter or an optical circulator (26') and a reflection filter (26").

8. Laser device according to one of claims 1 to 7, the first cavity (20) being in a ring or being a linear cavity.

9. Method for starting a laser device according to one of claims 1 to 8, comprising:
- generating, in the second cavity, a continuous-wave and multimode laser beam, at the wavelength (λ₁);
- generating, in the first cavity, a pulsed laser beam at the wavelength (λ₂) and at the wavelength (λ₁),
- stopping the continuous-wave laser beam.

10. Method according to claim 9, wherein the losses or the gain at the first wavelength (λ₁) are modulated during the starting period.

11. Method according to one of claims 9 or 10, the first cavity comprising 2 fibre amplifiers each pumped by a laser diode, the method further comprising modulating the beam of these diodes.
